Europäisches Patentamt

European Patent Office

Office européen des brevets

(11) Publication number: **0 139 900**
A1

## (12) EUROPEAN PATENT APPLICATION

(21) Application number: **84109065.7**

(22) Date of filing: **31.07.84**

(51) Int. Cl.⁴: **A 23 L 1/48**
A 23 L 1/176, B 65 D 85/78

(30) Priority: **10.08.83 JP 146031/83**

(43) Date of publication of application:
**08.05.85 Bulletin 85/19**

(84) Designated Contracting States:
AT BE CH DE FR GB IT LI LU NL SE

(71) Applicant: Taiyo Fishery Co., Ltd.
1-2, 1-chome Otemachi
Chiyoda-ku Tokyo 100(JP)

(72) Inventor: Takahashi, Koi c/o Taiyo Kenkyusho
Taiyo Fishery Co., Ltd. 2-9, 3-chome, Tsukishima
Chuo-ku Tokyo(JP)

(72) Inventor: Ito, Noriko c/o Taiyo Kenkyusho
Taiyo Fishery Co., Ltd. 2-9, 3-chome Tsukishima
Chuo-ku Tokyo(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) A frozen food for frying.

(57) A frozen food is prepared by filling precooked ingredients into an edible container and applying a coating and a bread crumb in order onto the surface of the ingredients exposed out of the edible container. The frozen food gives an appetizing snack food having nice taste and crispiness by frying it in an edible oil.

Croydon Printing Company Ltd.

0139900

A FROZEN FOOD FOR FRYING

## BACKGROUND OF THE INVENTION

This invention relates to a novel frozen food for frying, and more particularly to a novel frozen food which, by oil-frying, can be eaten simply like ice cream in a corn cup, hamburgers or the like.

In fast food shops, hamburgers, fried chicken and the like are popular amoung young people, because one can eat these foods easily or lightly while standing or walking without sitting down at table.

Ice cream in a corn cup is gaining popularity as refreshment or fashion, because one can easily eat it together with the corn cup and enjoy special taste and crispiness by the combination of corn cup and ice cream. Usually, filling of any food other than ice cream into a corn cup does not give a snack product having favorable taste and crispiness. This is especially true when the food to be filled into a corn cup contains a considerable amount of water. Even in case of ice cream in a corn cup, its crispiness is gradually lost by the influence of the water.

On the other hand, gratin is prepared by mixing and heat-cooking white sauce, fishes suitable for gratin such as crab and shrimp, macaroni, spice, seasoning or the like to obtain ingredients, putting the ingredients into a gratin dish or a cup made of base or crust of pie such as French pie and American pie crust, and heating them in an oven.

Gratin is very popular among young ladies, women and children and is said to be one of the most popular foods in family restaurants together with pizza pies and hamburgers. However its preparation includes a step of heating in an oven. Under the present circumstance, gratin is not served in fast food shops which are included in the food service industry together with family restaurants because of complicatedness of its cooking.

## SUMMARY OF THE INVENTION

An object of the invention is to provide a novel snack food having good taste which can be served by subjecting to simple treatment in a similar way as hamburgers, fried chicken and the like having served in fast food shops.

Other objects and advantages of the invention will become apparent from the following descrption of embodiments with reference to the drawings.

In order to achieve the objects of the invention, we have made various investigetions.  As the results, we have found that even if a corn cup is charged with such ingredients containing a considerable amount of water as precooked gratin ingredients, there can be obtained a snack food wherein the crispiness of corn cup is retained by subjecting them to specific treatment and thereafter frying them in oil.

The present invention have been made based on the above mentioned finding and provides a frozen food for frying produced by filling precooked ingredients into an edible container and applying a coating (batter) and a bread crumb in order onto a surface of ingredients exposed out of the edible container.

## BRIEF DESCRIPTION OF THE DRAWINGS

Fig. 1 is a perspective view showing an example of an edible container used in a frozen food for frying according to the present invention.

Fig. 2 is a perspective view showing an example of state wherein ingredients are filled into an edible container.

Fig. 3 is a perspective view showing an example of a frozen food for frying according to the present invention.

Figs. 4 and 5 are perspective views showing other edible containers used in a frosen food for frying according to the present invention.

## DETAILED DESCRIPTION OF THE PREFERRED EMBODIMENTS

Hereinunder is explained the frozen food for frying according to the present inveiton referring to the drawings.

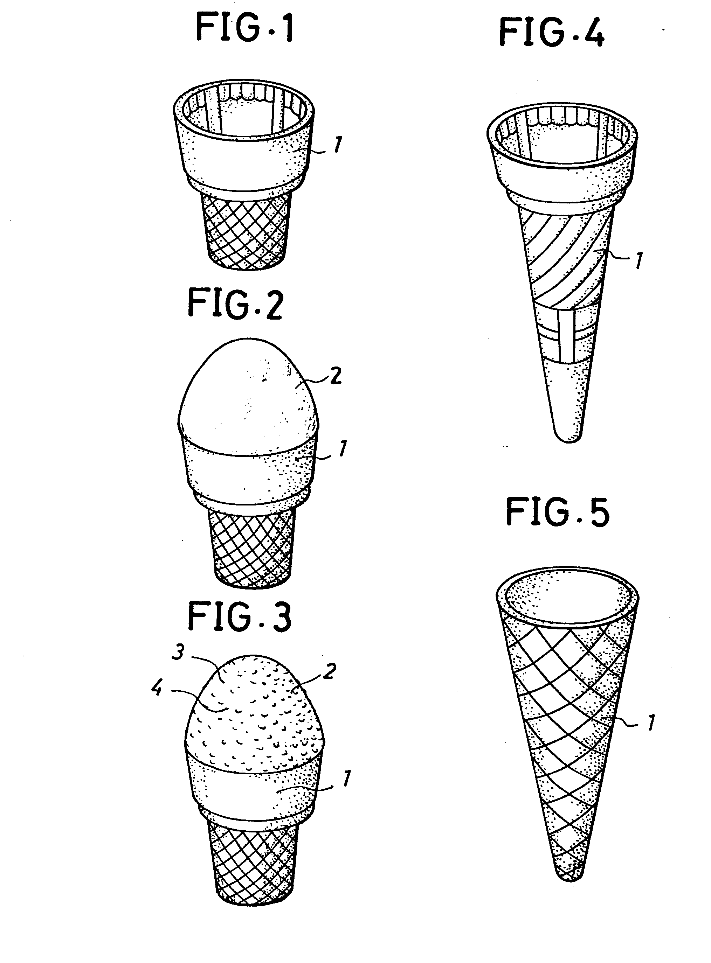

First, the components of the frozen food of the present invention are described. An edible container used in the present invention is prepared by processing cereals. The representative example is a known corn cup developed for soft cream. As other examples there are exemplified those prepared from pie base or crust, rice powder, potato and the like which may be seasoned suitably. The shape of the edible container may be variable depending on such factors as the kind of ingredients to be put thereinto. However, the edible container preferably used in the present invention is those having the same shape as known cups for soft cream shown in Figs. 1, 4 and 5. Especially preferred is the cup shown in Fig. 5 which has a smaller ratio of the uppermost opening diameter against the length (height ) thereof, because heat can uniformly and rapidly enter into the interior of the ingredients during frying the frozen food in oil and additionally the fried frozen food can conveniently be taken by hand during eating it.

As the ingredients to be filled into the above mentioned edible container, there may be any food which can be fried in oil, examples of which are gratin, cream croquette, various meat-containing processed food, processed fish, processed meat and the like.

Next, the preferred embodiment for the production of the frozen food for frying is described.

An edible container 1 as illustrated in Fig. 1 is provided.

Separately as ingredients to be filled into the container 1 is provided gratin ingredients prepared by mixing white sauce, fishes suitable for gratin such as crab and shrimp, spice, seasoning and the like, followed by heating. The container 1 is filled with the ingredients 2 so that the upper portion of the ingredients 2 becomes protuberant in a globular shape.

After freezing the ingredients filled into the container at a temperature range of $-15 \sim -40\,°C$ or without freezing treatment, a coating 3 is applied one to three times, preferably two times onto the surface of the ingredients 2 exposed out of the container 1, and thereafter a bread crumb 4 is applied thereonto, then the ingredients filled into the container is freezed again at a temperature range of $-15 \sim -40°C$ to give a frozen gratin as shown in Fig. 3 which is a frozen food for frying according to the present inveniton.

The frozen food according to the present invention produced in a manner as mentioned above gives a fried product by frying in a heated edible oil until heat reaches the central portion of the ingredients. During heating, neither deformation of the ingredients nor effluence of the ingredients from the edible container are observed. Further in the frozen food for frying according to the present invention, the ingredients are filled into a container at a state that a portion thereof is exposed out of the container and therefore the container is prevented from destroying due to inflation of water contained in the ingredients durig oil-frying.

As mentioned above, by simple cooking, the frozen food of the present invention gives a fried food which can be carried about easily. Like soft cream in a corn cup, one can eat it while walking or sitting on the bench in streets and parks. Therefore according to the present invention, it becomes possible to serve such foods as gratin as a commodity in fast food shops.

0139900

The following examples are merely illustrative of the present invention, and they should not be considered as limiting the scope of the invention in any way, as these examples and other equivalents thereof will become apparent to those versed in the art in the light of the present disclosure, the drawings and the accompanying claims.

Example 1

White sauce was prepared in the following formulation.

Formulation of base materials for white sauce

| | | |
|---|---|---|
| milk | 100 | parts by weight |
| margarine | 8 | |
| soft flour | 10 | |
| bouillon | 2 | |
| fresh cream | 4 | |
| sodium glutamate | 0.2 | |
| white pepper | 0.05 | |

To the white sauce prepared, there were added macaroni, boiled crab meat and finely cut and oil frizzled onion in the following formulation and the mixture was heated to prepare gratin ingredients.

## Formulation of gratin ingredients

| | |
|---|---|
| white sauce | 100 parts by weight |
| macaroni | 20 |
| boiled crab meat | 13 |
| finely cut and | |
| oil-frizzled onion | 10 |

Next, 110 g of gratin ingredients prepared as mentioned above was filled into a corn cup for soft cream (FLARE-TOP No. 1 produced by Nissei K.K.) having a shape shown in Fig. 4 so that the upper portion of the gratin ingredients became protuberant in a globular shape as shown in Fig. 2.

After rapid freezing it at $-40\,^{\circ}C$, the surface of the gratin ingredients exposed out of the cup is twice coated with a coating prepared from wheat flour, vegetable protein and cooled water, on which fine bread crumb having a size of 12 mesh was applied. Thereafter the gratin ingredients filled in the cup was freezed again to give a frozen food for frying accroding to the present invention.

Prior to serving, the frozen food obtained above was heated in an edible oil of $170\,^{\circ}C$ for 5 minutes so that heat reached the central portion of the gratin ingredients and simultaneously the corn cup used as an edible container was fried in the edible oil to give an appetizing fried food having crispiness and nice smell.

Of course the corn cup as an edible container which is used as the gratin container in the fried food can be eaten together with the gratin ingredients.

## Example 2

Another frozen food for frying wherein gratin ingredients were filled into a corn cup was obtained in the same manner as in Example 1 except that the formulation of base materials for white sauce and the formulation of ingredients in Example 1 were replaced by those described below.

### Formulation of base materials for white sauce

| | |
|---|---|
| milk | 100 parts by weight |
| margarine | 8 |
| soft flour | 5 |
| processed starch | 20 |
| bouillon | 2 |
| fresh cream | 4 |
| sodium glutamate | 0.2 |
| white pepper | 0.05 |

## Formulation of ingredients

| | |
|---|---|
| white sauce | 100 parts by weight |
| macaroni | 20 |
| peeled and boiled | |
| shrimp meat | 13 |
| finely cut and | |
| oil-frizzled onion | 10 |

-11-    0139900

WHAT IS CLAIMED IS :

1.   A frozen food for frying produced by filling precooked ingredients into an edible container and applying a coating and a bread crumb in order onto a surface of the ingredients exposed out of the edible container.

2.   A frozen food for frying according to Claim 1, wherein the edible container is an container prepared by processing cereals.

3.   A frozen food for frying according to Claim 2, wherein the container is a corn cup.

4.    A frozen food for frying according to Claim 1, wherein the ingredients are any food which can be fried in an edible oil.

5.    A frozen food for frying according to Cliam 4, wherein the food as the ingredients is selected from the group consisting of gratin, cream croquette, meat-containing processed food, processed fish and processed meat.

# FIG.1

1

# FIG.2

2

1

# FIG.3

3
2
4

1

# FIG.4

1

# FIG.5

1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 965 499 (R.T. WISE)<br><br>* Figure 2, claim *<br><br>--- | | A 23 L 1/42<br>A 23 L 1/176<br>B 65 D 85/78 |
| A | PATENT ABSTRACTS OF JAPAN, vol. 6, no. 266, 25 December 1982; & JP-A-57-159451 (MEIJI NIYUUGIYOU K.K.) 01-10-1982<br><br>--- | | |
| A,P | PATENT ABSTRACTS OF JAPAN, vol. 8, no. 85, 18 April 1984; & JP-A-59-6847 (KATOKICHI K.K.) 13-01-1984<br><br>--- | | |
| A,P | PATENT ABSTRACTS OF JAPAN, vol. 7, no. 209, 14 September 1983; & JP-A-58-107148 (NISSHIN SEIYU K.K.)25-06-1983<br><br>----- | | |
| | | | **TECHNICAL FIELDS SEARCHED (Int. Cl.4)**<br><br>A 23 L 1/00<br>B 65 D 85/00 |

The present search report has been drawn up for all claims

| Place of search | Date of completion of the search | Examiner |
|---|---|---|
| BERLIN | 24-10-1984 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82